# EUROPEAN PATENT APPLICATION

(11) **EP 4 368 439 A1**
(43) Date of publication of application: **15.05.2024**
(21) Application number: 22914014.0
(22) Date of filing: 02.12.2022
(51) Int. Cl.: B60L 3/00, G01R 31/327

(54) **POWER BATTERY RELAY CONTROL METHOD, APPARATUS AND NEW ENERGY AUTOMOBILE**

(30) Priority: 31.12.2021 CN 202111657177
(71) Applicant: China Faw Co., Ltd., Changchun, Jilin 130011 (CN)
(72) Inventor: LIU, Yixin, Changchun, Jilin 130011 (CN); LIU, Miaoran, Changchun, Jilin 130011 (CN); NIU, Chunjing, Changchun, Jilin 130011 (CN); RONG, Changru, Changchun, Jilin 130011 (CN); YANG, Xuefeng, Changchun, Jilin 130011 (CN)
(74) Representative: Grassi, Stefano
(86) International application number: PCT/CN2022/136084
(87) International publication number: WO 2023/124759

(57) **Abstract**

The present application provides a power battery relay control method and device, and a new energy vehicle. The power battery relay control method is applicable to a new energy vehicle development stage and an after-sales stage, and includes: determining, by a relay control device in the new energy vehicle, a received relay control mode instruction and relay control instruction sent by a diagnostic unit, to finally perform safety control on a power battery relay.

## Description

### Cross-Reference to Related Application

This present invention claims priority to China Patent Application No. 202111657177.5, filed on December 31, 2021 in China National Intellectual Property Administration, the disclosure of which is herein incorporated by reference in its entirety.

### Technical Field

The present application relates to the technical field of relay control, particularly to a power battery relay control method and device, and a new energy vehicle.

### Background

With the development of lithium-ion battery technologies and new energy vehicle technologies, new energy vehicles gradually enter the life of people. As more and more new energy vehicles are put into operation in the market, there are increasing demands for after-sales repair and troubleshooting of new energy vehicles.

A power battery of a new energy vehicle is a high-voltage component. Most power batteries have a nominal voltage of 300-600 V and have high energy and high voltage. As a switch between a high-voltage battery and an external circuit, a relay can effectively cut off a high-voltage circuit between a power battery and an entire vehicle. During after-sales troubleshooting of new energy vehicles, it is often necessary to control the relay and detect the high-voltage circuit. However, training with traditional safety operation rules cannot completely avoid misoperations performed by after-sales personnel on the relay. Once a misoperation occurs, other high-voltage components of the entire vehicle would be damaged, and a risk of high-voltage electric shock would be posed to the after-sales personnel.

### Summary

The present invention provides a power battery relay control method and device, and a new energy vehicle, to achieve safe control of high-voltage relays of a power battery and ensure the accuracy and reliability of troubleshooting of the power battery.

In a first aspect, the present application provides a power battery relay control method. The power battery relay control method includes:
powering on a relay control device to enter a single relay control mode, determining whether the relay control device satisfies a multiple relay control mode permit-to-enter condition, and determining a current relay control mode of the relay control device based on a result of whether the relay control device satisfies the multiple relay control mode permit-to-enter condition;
in a case that a relay control mode of the relay control device is the current relay control mode, receiving, by the relay control device, a relay control instruction sent by a diagnostic unit, and determining whether the relay control device satisfies a relay control execution condition; and
after it is determined that the relay control device satisfies the relay control execution condition, performing, by the relay control device, safety control on high-voltage relays based on the current relay control mode and the relay control instruction sent by the diagnostic unit.

In one implementation, before the powering on a relay control device to enter a single relay control mode, the power battery relay control method further includes:
enabling the relay control device to enter a diagnostic default session mode, and receiving, by the relay control device, a diagnostic extended session mode request sent by the diagnostic unit; and
in response to the diagnostic extended session mode request, enabling the relay control device to enter a diagnostic extended session security access mode through security access.

In one implementation, the determining whether the relay control device satisfies a multiple relay control mode permit-to-enter condition includes:
receiving, by the relay control device in the diagnostic extended session security access mode, a relay multiple relay control mode instruction sent by the diagnostic unit, and obtaining high-voltage relays switch-on information and vehicle speed information of a new energy vehicle; and
determining, based on the high-voltage relays switch-on information and the vehicle speed information, whether the relay control device satisfies the multiple relay control mode permit-to-enter condition;
wherein the multiple relay control mode permit-to-enter condition comprises following conditions: the high-voltage relays switch-on information indicates that the relay control device does not control any of the high-voltage relays to be switched on, and the vehicle speed information indicates that a vehicle speed is less than a preset speed threshold.

In one implementation, the current relay control mode includes a multiple relay control mode and the single relay control mode; and
the determining a current relay control mode of the relay control device based on a result of whether the relay control device satisfies the multiple relay control mode permit-to-enter condition comprises:
if the relay control device satisfies the multiple relay control mode permit-to-enter condition, making, by the relay control device, an active response to the diagnostic unit to enter the multiple relay control mode; and
if the relay control device does not satisfy the multiple relay control mode permit-to-enter condition, making, by the relay control device, a negative response to the diagnostic unit to enter the single relay control mode.

In one implementation, the power battery relay control method further includes:
if the relay control device receives a multiple relay control mode exit instruction sent by the diagnostic unit, switching the relay control mode of the relay control device from the multiple relay control mode to the single relay control mode, and controlling, by the relay control device, the high-voltage relays to be switched off.

In one implementation, the determining whether the relay control device satisfies a relay control execution condition includes:
receiving, by the relay control device in the diagnostic extended session security access mode, the relay control instruction sent by the diagnostic unit, and obtaining high-voltage relays switch-on information, vehicle speed information, relay fault information, and entire vehicle low-voltage power supply information of a new energy vehicle; and
determining, based on the high-voltage relays switch-on information, the vehicle speed information, the relay fault information, and the entire vehicle low-voltage power supply information, whether the relay control device satisfies the relay control execution condition;
wherein the relay control execution condition comprises following situations: the high-voltage relays switch-on information indicates that the relay control device does not control any of the high-voltage relays to be switched on; the vehicle speed information indicates that a vehicle speed is less than a preset speed threshold; the relay fault information indicates that the high-voltage relays does not have a fault; and the entire vehicle low-voltage power supply information indicates that a low-voltage power supply voltage of the entire vehicle is greater than a preset low-voltage power supply voltage threshold.

In one implementation, the performing, by the relay control device, safety control on the high-voltage relays based on the current relay control mode and the relay control instruction sent by the diagnostic unit includes:
in response to the current relay control mode is the multiple relay control mode, performing, by the relay control device, safety control on the high-voltage relays based on the relay control instruction sent by the diagnostic unit; and
in response to the current relay control mode is the single relay control mode, determining whether the relay control device satisfies a relay control condition,
wherein the relay control condition comprises following situations: the diagnostic unit does not control any of the high-voltage relays to be switched on, and the current relay control mode is a non multiple relay control mode.

In one implementation, the power battery relay control method further includes:
if it is determined that the relay control device satisfies the relay control condition, performing, by the relay control device, safety control on the high-voltage relays based on the relay control instruction sent by the diagnostic unit; and
if the relay control device receives a relay control exit instruction sent by the diagnostic unit, controlling, by the relay control device, the high-voltage relays to be switched off.

In a second aspect, the present application further provides a power battery relay control device, including a relay control device, a diagnostic unit, high-voltage relays, and a communication device. The power battery relay control device implements the power battery relay control method in the first aspect of the present application.

In a third aspect, the present application further provides a new energy vehicle. The new energy vehicle includes the power battery relay control device in the second aspect of the present application.

### Brief Description of the Drawings

FIG. 1 is a flowchart of a power battery relay control method provided in Embodiment I of the present application;
FIG. 2 is a flowchart of a power battery relay control method provided in Embodiment II of the present application; and
FIG. 3 is a structural diagram of a power battery relay control device provided in Embodiment III of the present application.

### Detailed Description of the Embodiments

The embodiments of the present application are described below in combination with the accompanying drawings. The specific embodiments described here are only used for explain the present application.

For the convenience of description, only the parts related to the present application are shown in the attached drawings. Before discussing exemplary embodiments, it should be mentioned that some exemplary embodiments are described as processing or methods in flowcharts. Although a flowchart describes multiple operations (or steps) as sequential processing, many of the operations can be implemented in parallel, concurrently, or simultaneously. In addition, the sequence of the multiple operations can be rearranged. When an operation is completed, the processing can be terminated, but there can also be additional steps not included in the accompanying drawings. The processing can correspond to methods, functions, procedures, subroutines, subprograms, and the like.

### Embodiment I

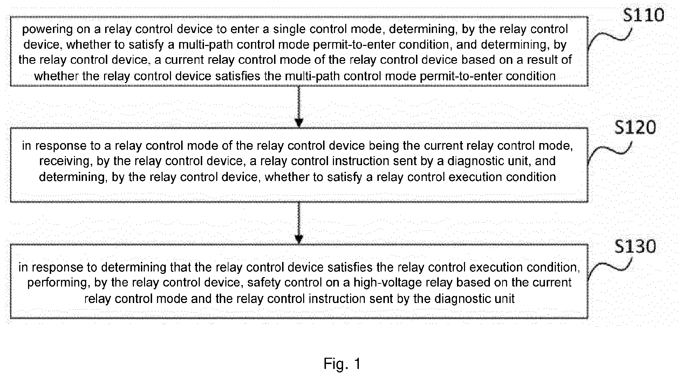

FIG. 1 is a flowchart of a power battery relay control method provided in Embodiment I of the present application. This embodiment is applicable to safety protection for controlling a relay in development and after-sales stages, and diagnosis of a high-voltage circuit system of an entire vehicle. The power battery relay control method can be implemented by a power battery relay control device. The power battery relay control method includes the following steps:
S110: Powering on a relay control device to enter a single relay control mode, determining, by the relay control device, whether to satisfy a multiple relay control mode permit-to-enter condition, and determining, by the relay control device, a current relay control mode of the relay control device based on a result of whether the relay control device satisfies the multiple relay control mode permit-to-enter condition.

The relay control device is an electric control unit in an electric vehicle for controlling high-voltage relays. After the relay control device receives a relay control instruction and relay control mode instruction sent by a diagnostic unit, the relay control mode and a relay control instruction execution condition are determined through the internal power battery relay control method, and the high-voltage relays is controlled to be switched off and switched on based on determination results.

The single relay control mode is referred to as a high-voltage safety mode. In this mode, an operator can only control a single relay to be switched on through the diagnostic unit. If a single relay needs to be controlled to be switched on, it is necessary to determine whether the diagnostic unit has controlled other relays to be switched on. If other relays have been controlled to be switched on, the current relay cannot be controlled. The current relay can be operated only after other relays are switched off, so that a high-voltage circuit generated by simultaneously switching on two relays is effectively avoided, which ensures high-voltage safety for after-sales personnel and the entire vehicle.

The multiple relay control mode permit-to-enter condition means that a relay controller determines normal high-voltage circuit connection states of a relay and the electric vehicle before entering a multiple relay control mode. The multiple relay control mode permit-to-enter condition includes following situations: current relay state information indicates that no other relays are controlled to be switched on, and vehicle speed information indicates that a vehicle speed is less than a preset speed threshold. Optional, the preset speed threshold is 5 km/h.

Only when the following two conditions are simultaneously satisfied: the current relay state information indicates that no other relays are controlled to be switched on and the vehicle speed information indicates that the vehicle speed is less than the preset speed threshold, it is considered that the relay control device satisfies the multiple relay control mode permit-to-enter condition, and the current relay control mode of the relay control device is determined to be the multiple relay control mode. When any condition is not satisfied, it is considered that the relay control device does not satisfy the multiple relay control mode permit-to-enter condition, and the current relay control mode of the relay control device is determined to be the single relay control mode.

In this embodiment, it is default that the relay control device enters the single relay control mode when powered on. If the relay control device does not receive the relay mode control instruction sent by the diagnostic unit or does not send a request for a multiple relay control mode instruction, it is determined that the relay control device does not satisfy the multiple relay control mode permit-to-enter condition, and that the current relay control mode of the relay control device is the single relay control mode by default. If the relay control device receives the relay mode control instruction sent by the diagnostic unit, and it is determined that the relay control device satisfies the multiple relay control mode permit-to-enter condition, the current relay control mode of the relay control device is determined to enter the multiple relay control mode.

On the basis of the above embodiment, before the relay control device is powered on to enter a single relay control mode, the power battery relay control method further includes: entering, by the relay control device, a diagnostic default session mode, and receiving, by the relay control device, a diagnostic extended session mode request sent by the diagnostic unit; and in response to the diagnostic extended session mode request, entering, by the relay control device, a diagnostic extended session security access mode through security access.

Security access (0x27) is an authorization manner designed for vehicle's security, which allows the diagnostic unit to access important data within an Electronic Control Unit (ECU) or to request the ECU to perform a diagnostic service that affects vehicle security. The security access is achieved through a Seed-Key manner. The ECU can not be unlocked without security access, not allowing to access important data (distributed identity (DID))/storage regions and perform some diagnostic services that affect the vehicle security. The ECU is unlocked by security access to allow the above operations to be executed.

In this embodiment, before the relay control device is powered on to enter a single relay control mode, the electric vehicle is connected to the diagnostic unit, and the relay control device enters the diagnostic default session mode; the diagnostic unit sends the diagnostic extended session mode request to the relay control device, and the relay control device enters the diagnostic extended session security access mode through security access.

Calculations of a security access algorithm are performed between the relay control device and the diagnostic unit. In response to the security access, if the security access succeeds, the relay control device makes an active response to the diagnostic unit. At this time, the relay control device is controlled to enter the diagnostic extended session security access mode through the security access. If the security access fails, the relay control device makes a negative response to the diagnostic unit. At this time, the relay control device will not enter the diagnostic extended session security access mode because the security access fails.

On the basis of the above embodiment, the current relay control mode includes a multiple relay control mode and the single relay control mode. The determining a current relay control mode of the relay control device based on a result of whether the relay control device satisfies the multiple relay control mode permit-to-enter condition includes: if the relay control device satisfies the multiple relay control mode permit-to-enter condition, the relay control device makes an active response to the diagnostic unit to enter the multiple relay control mode; and
if the relay control device does not satisfy the multiple relay control mode permit-to-enter condition, the relay control device makes a negative response to the diagnostic unit to enter the single relay control mode.

The current relay control mode includes a single-relay control mode and a multi-relay control mode, and different control permissions are set for controlling the relays based on the two relay control modes. By distinguishing relay control permissions and limiting operation permissions by the relay control device, when the relay control device is applied to an after-sales stage of the electric vehicle, operations performed by after-sales personnel on the relays in the after-sales process can be limited, to prevent misoperations of the after-sales personnel on the relays and ensure the safety of the after-sales personnel and high-voltage circuits of the entire vehicle.

In the multiple relay control mode, an operator can control multiple relays to be switched on simultaneously through the diagnostic unit, but in an actual operation process, it is necessary to comply with safety operation rules.

In the diagnostic extended session security access mode, the relays are controlled through input/output (IO) services. The diagnostic unit sends a multiple relay control mode request instruction to the relay control device, determines whether the relay control device satisfies the multiple relay control mode permit-to-enter condition, and determines the current relay control mode of the relay control device based on the result of whether the relay control device satisfies the multiple relay control mode permit-to-enter condition.

Based on the above embodiment, in response to the relay control device receives a multiple relay control mode exit instruction sent by the diagnostic unit, the relay control mode of the relay control device is switched from the multiple relay control mode to the single relay control mode, and the relay control device controls all the high-voltage relays to be switched off.

If the relay control device receives the multiple relay control mode exit instruction sent by the diagnostic unit, the relay control device will exit control of all the relays, and all the relays are in an off state. At the same time, the relay control device exits the multiple relay control mode and determines that the current relay control mode of the relay control device is the single relay control mode.

S120:ln response to a relay control mode of the relay control device being the current relay control mode, receiving, by the relay control device, a relay control instruction sent by a diagnostic unit, and determining, by the relay control device, whether to satisfy a relay control execution condition.

The diagnostic unit is an automotive diagnostic device developed in accordance with the Unified Diagnostic Services (UDS) protocol. After-sales personnel or a developer can send control instructions to the relay controller inside the electric vehicle through the diagnostic unit. The control instructions include a relay control instruction and a relay control mode instruction in this embodiment.

The diagnostic unit interacts with the relay control device through a communication device by data. The communication device can be a Controller Area Network (CAN) bus communication device. The communication device transmits a relay mode control instruction and/or a relay control instruction generated by the diagnostic unit to the relay control device in the electric vehicle.

The relay control execution condition is that the relay control device determines states of the relays and a high-voltage circuit connection state of the entire vehicle before executing relay control.

Based on the above, the determining whether the relay control device satisfies a relay control execution condition includes: the relay control device in the diagnostic extended session security access mode receives the relay control instruction sent by the diagnostic unit, and obtains high-voltage relays switch-on information, vehicle speed information, relay fault information, and entire vehicle low-voltage power supply information of a new energy vehicle; and whether the relay control device satisfies the relay control execution condition is determined based on the high-voltage relays switch-on information, the vehicle speed information, the relay fault information, and the entire vehicle low-voltage power supply information, wherein the relay control execution condition includes following situations: the high-voltage relays switch-on information indicates that the relay control device does not control any of the high-voltage relays to be switched on; the vehicle speed information indicates that a vehicle speed is less than a preset speed threshold; the relay fault information indicates that the high-voltage relays does not have a fault; and the entire vehicle low-voltage power supply information indicates that a low-voltage power supply voltage of the entire vehicle is greater than a preset low-voltage power supply voltage threshold.

The relay control device controls the relays through the IO services in the diagnostic extended session security access mode. If the relay control device determines, in response to the relay control instruction sent by the diagnostic unit, that the relay controller satisfies the relay control execution condition, and controls the relays based on the relay control instruction sent by the diagnostic unit. If the relay controller does not satisfy the relay control execution condition, the relay control device makes a negative response to the diagnostic unit, that is, if the relay control execution condition is not satisfied, the relay control instruction sent by the diagnostic unit is not executed.

It is considered that the relay control device satisfies the relay control execution condition only when the following four conditions are satisfied simultaneously: the high-voltage relays switch-on information indicates that the relay control device does not control any of the high-voltage relays to be switched on; the vehicle speed information indicates that a vehicle speed is less than a preset speed threshold; the relay fault information indicates that the high-voltage relays does not have a fault; and the entire vehicle low-voltage power supply information indicates that a low-voltage power supply voltage of the entire vehicle is greater than a preset low-voltage power supply voltage threshold; and the relay control device executes the relay control instruction on high-voltage relays. If any condition is not satisfied, it is considered that the relay control device does not satisfy the relay control execution condition, and the relay control device cannot execute the relay control instruction on the high-voltage relays.

S130: In response to determining that the relay control device satisfies the relay control execution condition, performing, by the relay control device, safety control on high-voltage relays based on the current relay control mode and the relay control instruction sent by the diagnostic unit.

The high-voltage relays are the actuators of a high-voltage circuit system of the electric vehicle, can be controlled by the relay control device, and has an on state and an off state. High-voltage relays on the electric vehicle include a main positive relay, a main negative relay, a pre-charging relay, a fast charging positive relay, a fast charging negative relay, and other relays. By switching on and switching off the high-voltage relays, it is possible to control whether the high-voltage circuit system of the entire electric vehicle, except for a power battery, has a high voltage.

Based on the above embodiment, the performing, by the relay control device, safety control on the high-voltage relays based on the current relay control mode and the relay control instruction sent by the diagnostic unit includes: if the current relay control mode is the multiple relay control mode, the relay control device performs safety control on the high-voltage relays based on the relay control instruction sent by the diagnostic unit; and if the current relay control mode is the single relay control mode, whether the relay control device satisfies a relay control condition is determined, wherein the relay control condition includes following situations: the diagnostic unit does not control any of the high-voltage relays to be switched on, and the current relay control mode is a non multiple relay control mode.

If the current relay control mode is the multiple relay control mode, the relay control device performs the safety control on the relay control instruction of the high-voltage relays, that is, the corresponding high-voltage relays is switched off or switched on based on the relay control instruction. If the current relay control mode is the single relay control mode, whether the relay control device satisfies the relay control condition is determined. The relay control condition includes the following situations: the diagnostic unit does not control any of the high-voltage relays to be switched on, and the current relay control mode is the non multiple relay control mode.

It is determined that the relay control device satisfies the relay control condition only when the diagnostic unit does not control any of the high-voltage relays to be switched on and the current relay control mode is the non multiple relay control mode, and the relay control device executes the relay control instruction on the high-voltage relays. If any condition is not satisfied, it is considered that the relay control device does not satisfy the relay control condition, and the relay control device does not execute the relay control instruction on the high-voltage relays.

Based on the above embodiment, if it is determined that the relay control device satisfies the relay control condition, the relay control device performs the safety control on the high-voltage relay based on the relay control instruction sent by the diagnostic unit; and if the relay control device receives a relay control exit instruction sent by the diagnostic unit, the relay control device controls the high-voltage relays to be switched off.

Based on the above, when after-sales personnel provide an after-sales service, the diagnostic unit is used for cause the relay control device to first enter the single relay control mode by default. When the relay control instruction is sent to the relay control device through the diagnostic unit, only a single relay can be controlled to be switched on, which avoids formation of a high-voltage circuit, prevent a power battery from outputting a high voltage power to vehicle, and effectively prevent harm to the after-sales personnel due to improper operations. A professional uses the diagnostic unit to cause the relay control device to enter the multiple relay control mode. If it is ensured to be safe, the professional sends the relay control instruction to the relay control device by using the diagnostic unit, and the relay control device completes control on the relays, facilitating troubleshooting and meeting development needs.

Based on the technical solutions of the embodiments of the present application, the relay control device is powered on to enter the single relay control mode. Whether the relay control device satisfies the multiple relay control mode permit-to-enter condition is determined, and the current relay control mode of the relay control device is determined based on the result of whether the relay control device satisfies the multiple relay control mode permit-to-enter condition. When the relay control mode of the relay control device is the current relay control mode, the relay control device receives the relay control instruction sent by the diagnostic unit, and whether the relay control device satisfies the relay control execution condition is determined. After it is determined that the relay control device satisfies the relay control execution condition, the relay control device performs the safely control on the high-voltage relays based on the current relay control mode and the relay control instruction sent by the diagnostic unit. The following problem is solved: Training with traditional safety operation rules cannot completely avoid misoperations performed by after-sales personnel on the relay; and once a misoperation occurs, other high-voltage components of the entire vehicle will be damaged, and a risk of high-voltage electric shock will be posed to the after-sales personnel. The performance and efficiency of safety control of the relays of a power battery are improved, and the accuracy and reliability of troubleshooting of the power battery are guaranteed.

### Embodiment II

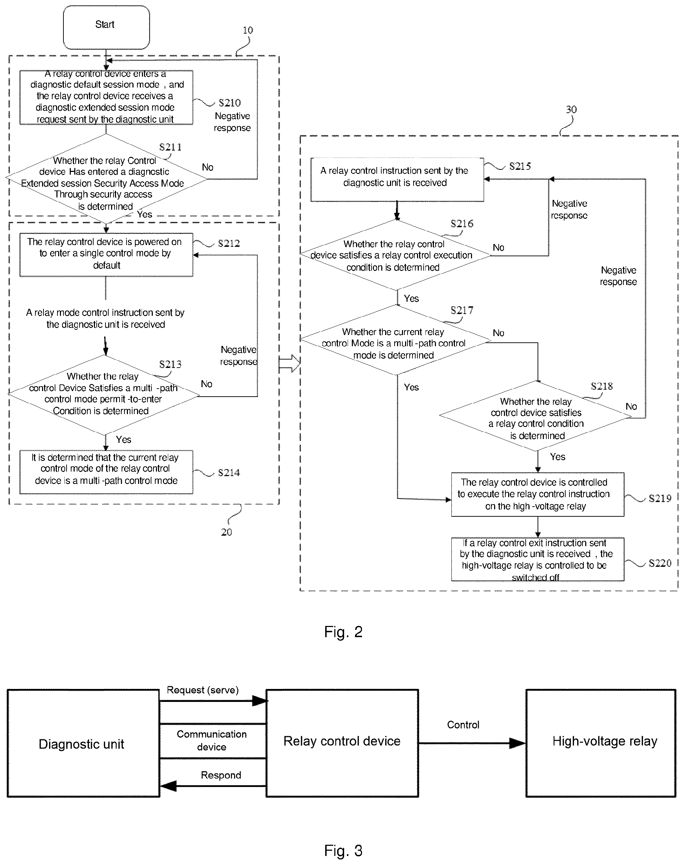

FIG. 2 is a flowchart of a power battery relay control method provided in Embodiment II of the present application. This embodiment is optimized on the basis of the above embodiment.

Correspondingly, the method of this embodiment includes:
S210. A relay control device enters a diagnostic default session mode, and the relay control device receives a diagnostic extended session mode request sent by the diagnostic unit.

An electric vehicle is connected to the diagnostic unit. The relay control device enters the diagnostic default session mode. The relay control device receives the diagnostic extended session mode request sent by the diagnostic unit.

S211. In response to the diagnostic extended session mode request, whether the relay control device has entered a diagnostic extended session security access mode through security access is determined; if the relay control device has entered the diagnostic extended session security access mode through the security access, step S212 is executed; and if the relay control device does not enter the diagnostic extended session security access mode through the security access, the relay control device makes a negative response to the diagnostic unit.

Before the relay control device receives a relay mode control instruction and/or a relay control instruction sent by the diagnostic unit, it is necessary to confirm whether the relay control device has entered the diagnostic extended session security access mode through the security access.

As shown in FIG. 2, steps S210 and S211 represent a security access flow in an execution flow of the relay control device, that is, the relay control device is in the diagnostic default session mode 10.

S212. The relay control device is powered on and enter a single relay control mode by default.

S213. The relay mode control instruction sent by the diagnostic unit is received; whether the relay control device satisfies a multiple relay control mode permit-to-enter condition is determined; if the relay control device satisfies the multiple relay control mode permit-to-enter condition, step S214 is executed; and if the relay control device does not satisfy the multiple relay control mode permit-to-enter condition, step S212 is executed.

A method for determining the multiple relay control mode permit-to-enter condition is as follows: After-sales personnel or other personnel send the relay mode control instruction to the relay control device in the electric vehicle by using the diagnostic unit. If the relay mode control instruction received by the relay control device indicates entering the multiple relay control mode, a relay controller determines current actual switch-off information of thehigh-voltage relays of the vehicle and vehicle speed information. That is, a current high-voltage relays state information indicates that other high-voltage relays are not controlled to be switched off, and the vehicle speed information indicates that a vehicle speed is less than a preset speed threshold.

The current high-voltage relays state information is that other high-voltage relays are not controlled to be switched on, which is to confirm that the relay controller does not control any high-voltage relays to be switched on and considers that the entire vehicle has been below a high voltage. The relay control device can perform a relay control operation in response to the instruction of the diagnostic unit, without affecting the power of the whole vehicle.

When the vehicle speed information indicates that a current vehicle speed is less than 5 km/h, it is considered that the vehicle is in a safe stationary state.

If both the above conditions are satisfied, the current relay control mode of the relay control device is switched to a multiple relay control mode. If either of the above conditions is not satisfied, no multiple relay control mode instruction is sent, or if the above conditions are not satisfied, the relay control device enters the single relay control mode by default.

Based on the above, in the diagnostic extended session security access mode of the relay control device, the diagnostic unit sends the multiple relay control mode exit instruction to the relay control device, and the relay control device returns to the default single relay control mode. At this time, the relay control device controls all relays to be switched off, and relay control devices return to be controlled by relay control device software logic.

When it is determined that the relay control device does not satisfy the multiple relay control mode permit-to-enter condition, the relay control device makes the negative response to the diagnostic unit, and it is determined that the current relay control mode of the relay control device is the single relay control mode, that is, step S212 is executed again.

S214. It is determined that the current relay control mode of the relay control device is a multiple relay control mode.

As shown in FIG. 2, steps S212 to S214 are relay control mode entry and exit flows in the execution flow of the relay control device, that is, the relay control device is in the diagnostic extended session security access mode 20.

S215. A relay control instruction sent by the diagnostic unit is received.

S216. Whether the relay control device satisfies a relay control execution condition is determined; if the relay control device satisfies the relay control execution condition, step S217 is executed; and if the relay control device does not satisfy the relay control execution condition, the relay control device make a negative response to the diagnostic unit.

Before the relay control device executes the instruction of the diagnostic unit to control relays, the relay control execution condition for safety control of the relay includes following situations: current relay state information indicates that other relays are not controlled to be switched on; vehicle speed information indicates that a vehicle speed is less than a preset speed threshold value; relay fault information indicates that the high-voltage relays has no fault; and entire vehicle low-voltage power supply information indicates that a low-voltage power supply voltage of the entire vehicle is greater than a preset low-voltage power supply voltage threshold.

The current relay state information is that other relays are not controlled to be switched on, which is to confirm that the relay control device does not control any high-voltage relays to be switched on and considers that the entire vehicle has been below a high voltage. The relay control device can perform a relay control operation in response to the instruction of the diagnostic unit, without affecting the power of the entire vehicle.

When the vehicle speed information indicates that a current vehicle speed is less than 5 km/h, it is considered that the vehicle is in a safe stationary state, and the relay control operation will not affect the power of the vehicle.

If the relay fault information indicates that the high-voltage relays has no fault, it indicates that the high-voltage relays has no contact fault or coil fault, and it is considered that the high-voltage relays can accurately execute instructions.

The entire vehicle low-voltage power supply information is the low-voltage power supply voltage of the entire vehicle. If the low-voltage power supply voltage of the entire vehicle is greater than 9 V, it is considered that the supply voltage is normal and satisfies the capability of swich on/off the high-voltage relays.

When all the four conditions above are satisfied, the relay control device can execute a control instruction sent by the diagnostic unit on the relays.

S217. Whether the current relay control mode is a multiple relay control mode is determined; if the current relay control mode is the multiple relay control mode, step S219 is executed; and if the current relay control mode is not the multiple relay control mode, step S218 is executed.

S218. Whether the relay control device satisfies a relay control condition is determined; if the relay control device satisfies the relay control condition, step S219 is executed; and if the relay control device does not satisfy the relay control condition, the relay control device make a negative response to the diagnostic unit.

S219. The relay control device is controlled to execute the relay control instruction on the high-voltage relays.

S220. If a relay control exit instruction sent by the diagnostic unit is received, the high-voltage relays is controlled to be switched off.

As shown in FIG. 2, steps S215 to S220 are a relay control mode flow in the execution flow of the relay control device, that is, the relay control device is in the diagnostic extended session security access mode 20.

Based on the technical solution of this embodiment of the present application, for the characteristics of the power battery of the electric vehicle of high energy and high voltage, to effectively ensure the safety of after-sales personnel and the safety of operations of the relays of the power battery, the diagnostic unit is used for develop two different control modes on the relay control device and set two relay control permissions, so that safety control of the relays in the after-sales stage can be achieved, and harms to after-sales personnel and a high-voltage circuit system of the entire vehicle caused by a misoperation of the after-sales personnel on the relays during repair can be prevented. Furthermore, it is convenient for developers to control the relays, thereby meeting a requirement for troubleshooting the high-voltage circuit system. Therefore, the present application improves the ability and efficiency of after-sales troubleshooting, and ensures the safety and reliability of after-sales troubleshooting for electric vehicles.

### Embodiment III

FIG. 3 is a structural diagram of a power battery relay control device provided in Embodiment III of the present application. This embodiment is applicable to safety protection for controlling a relay in development and after-sales stages, and diagnosis of a high-voltage circuit system of an entire vehicle.

As shown in FIG. 3, the power battery relay control device includes a relay control device, a diagnostic unit, high-voltage relays, and a communication device. The power battery relay control device can implement the power battery relay control method provided in any embodiment of the present application, and has corresponding functional modules and effects of implementing the power battery relay control method.

Based on the power battery relay control device provided by this embodiment of the present application, the relay control device is powered on to enter the single relay control mode. Whether the relay control device satisfies the multiple relay control mode permit-to-enter condition is determined, and the current relay control mode of the relay control device is determined based on the result of whether the relay control device satisfies the multiple relay control mode permit-to-enter condition. When the relay control mode of the relay control device is the current relay control mode, the relay control device receives the relay control instruction sent by the diagnostic unit, and whether the relay control device satisfies the relay control execution condition is determined. After it is determined that the relay control device satisfies the relay control execution condition, the relay control device performs the safely control on the high-voltage relays based on the current relay control mode and the relay control instruction sent by the diagnostic unit. The following problem is solved: Training with traditional safety operation rules cannot completely avoid misoperations performed by after-sales personnel on the relay; and once a misoperation occurs, other high-voltage components of the entire vehicle will be damaged, and a risk of high-voltage electric shock will be posed to the after-sales personnel. The performance and efficiency of safety control of the relays of a power battery are improved, and the accuracy and reliability of troubleshooting of the power battery are guaranteed.

### Embodiment IV

This embodiment of the present application provides a new energy vehicle. The new energy vehicle includes the power battery relay control device provided in any embodiment of the present application.

Based on the new energy vehicle provided in this embodiment of the present application, the relay control device is powered on to enter the single relay control mode. Whether the relay control device satisfies the multiple relay control mode permit-to-enter condition is determined, and the current relay control mode of the relay control device is determined based on the result of whether the relay control device satisfies the multiple relay control mode permit-to-enter condition. When the relay control mode of the relay control device is the current relay control mode, the relay control device receives the relay control instruction sent by the diagnostic unit, and whether the relay control device satisfies the relay control execution condition is determined. After it is determined that the relay control device satisfies the relay control execution condition, the relay control device performs the safely control on the high-voltage relays based on the current relay control mode and the relay control instruction sent by the diagnostic unit. The following problem is solved: Training with traditional safety operation rules cannot completely avoid misoperations performed by after-sales personnel on the relay; and once a misoperation occurs, other high-voltage components of the entire vehicle will be damaged, and a risk of high-voltage electric shock will be posed to the after-sales personnel. The performance and efficiency of safety control of the relays of a power battery are improved, and the accuracy and reliability of troubleshooting of the power battery are guaranteed.

## Claims

1. A power battery relay control method, comprising:
powering on a relay control device to enter a single relay control mode, determining, by the relay control device, whether to satisfy a multiple relay control mode permit-to-enter condition, and determining, by the relay control device, a current relay control mode of the relay control device based on a result of whether the relay control device satisfies the multiple relay control mode permit-to-enter condition;
in response to a relay control mode of the relay control device being the current relay control mode, receiving, by the relay control device, a relay control instruction sent by a diagnostic unit, and determining, by the relay control device, whether to satisfy a relay control execution condition; and
in response to determining that the relay control device satisfies the relay control execution condition, performing, by the relay control device, safety control on high-voltage relays based on the current relay control mode and the relay control instruction sent by the diagnostic unit.

2. The power battery relay control method as claimed in claim 1, before the powering on a relay control device to enter a single relay control mode, further comprising:
entering, by the relay control device, a diagnostic default session mode, and receiving, by the relay control device, a diagnostic extended session mode request sent by the diagnostic unit; and
in response to the diagnostic extended session mode request, entering, by the relay control device, a diagnostic extended session security access mode through security access.

3. The power battery relay control method as claimed in claim 2, wherein the determining whether the relay control device satisfies a multiple relay control mode permit-to-enter condition comprises:
under the diagnostic extended session security access mode, receiving, by the relay control device, a relay multiple relay control mode instruction sent by the diagnostic unit, and obtaining, by the relay control device, high-voltage relays switch-on information and vehicle speed information of a new energy vehicle; and
determining, by the relay control device, whether to satisfy the multiple relay control mode permit-to-enter condition based on the high-voltage relays switch-onhigh-voltage relays switch-on information and the vehicle speed information;
wherein the multiple relay control mode permit-to-enter condition comprises following conditions: the high-voltage relays switch-onhigh-voltage relays switch-on information indicates that the relay control device does not control any of the high-voltage relays to be switched on, and the vehicle speed information indicates that a vehicle speed is less than a preset speed threshold.

4. The power battery relay control method as claimed in claim 1, wherein the current relay control mode comprises a multiple relay control mode and the single relay control mode; and
the determining a current relay control mode of the relay control device based on a result of whether the relay control device satisfies the multiple relay control mode permit-to-enter condition comprises:
in response to the relay control device satisfying the multiple relay control mode permit-to-enter condition, making, by the relay control device, an active response to the diagnostic unit to enter the multiple relay control mode; and
in response to the relay control device not satisfying the multiple relay control mode permit-to-enter condition, making, by the relay control device, a negative response to the diagnostic unit to enter the single relay control mode.

5. The power battery relay control method as claimed in claim 4, further comprising:
in response to the relay control device receiving a multiple relay control mode exit instruction sent by the diagnostic unit, switching, by the relay control device, the relay control mode from the multiple relay control mode to the single relay control mode, and controlling, by the relay control device, the high-voltage relays to be switched off.

6. The power battery relay control method as claimed in claim 2, wherein the determining whether the relay control device satisfies a relay control execution condition comprises:
under the diagnostic extended session security access mode, receiving, by the relay control device, the relay control instruction sent by the diagnostic unit, and obtaining, by the relay control device, high-voltage relays switch-onhigh-voltage relays switch-on information, vehicle speed information, relay fault information, and entire vehicle low-voltage power supply information of a new energy vehicle; and
determining, by the relay control device, whether the relay control device satisfies the relay control execution condition, based on the high-voltage relays switch-on information, the vehicle speed information, the relay fault information, and the entire vehicle low-voltage power supply information;
wherein the relay control execution condition comprises following situations: the high-voltage relays switch-on information indicates that the relay control device does not control any of the high-voltage relays to be switched on; the vehicle speed information indicates that a vehicle speed is less than a preset speed threshold; the relay fault information indicates that the high-voltage relays does not have a fault; and the entire vehicle low-voltage power supply information indicates that a low-voltage power supply voltage of the entire vehicle is greater than a preset low-voltage power supply voltage threshold.

7. The power battery relay control method as claimed in claim 4, wherein the performing, by the relay control device, safety control on the high-voltage relays based on the current relay control mode and the relay control instruction sent by the diagnostic unit comprises:
in response to the current relay control mode being the multiple relay control mode, performing, by the relay control device, safety control on the high-voltage relays based on the relay control instruction sent by the diagnostic unit; and
in response to the current relay control mode being the single relay control mode, determining whether the relay control device satisfies a relay control condition,
wherein the relay control condition comprises following situations: the diagnostic unit does not control any of the high-voltage relays to be switched on, and the current relay control mode is a non multiple relay control mode.

8. The power battery relay control method as claimed in claim 7, further comprising:
in response to determining that the relay control device satisfies the relay control condition, performing, by the relay control device, safety control on the high-voltage relays based on the relay control instruction sent by the diagnostic unit; and
in response to the relay control device receiving a relay control exit instruction sent by the diagnostic unit, controlling, by the relay control device, the high-voltage relays to be switched off.

9. A power battery relay control device, comprising a relay control device, a diagnostic unit, high-voltage relays, and a communication device, wherein the power battery relay control device implements the power battery relay control method as claimed in any one of claims 1 to 8.

10. A new energy vehicle, comprising the power battery relay control device as claimed in claim 9.
